Europäisches Patentamt

European Patent Office

Office européen des brevets

(11) Publication number: **0 473 258 A2**

# EUROPEAN PATENT APPLICATION

(21) Application number: **91305517.4**

(22) Date of filing: **18.06.91**

(51) Int. Cl.5: **F02B 41/04**

(30) Priority: **31.07.90 GB 9016813**
**10.01.91 GB 9100516**

(43) Date of publication of application:
**04.03.92 Bulletin 92/10**

(84) Designated Contracting States:
**DE FR GB IT**

(71) Applicant: **LUCAS INDUSTRIES PUBLIC LIMITED COMPANY**
**Brueton House, New Road**
**Solihull, West Midlands B91 3TX(GB)**

(72) Inventor: **Wakeman, Anthony Claude**
**10 Romsley Hill Grange, Farley Lane,**
**Romsley**
**Halesowen, West Midlands B62 0LN(GB)**

(74) Representative: **Waite, Anthony William et al**
**MARKS & CLERK Alpha Tower Suffolk Street**
**Oueensway**
**Birmingham B1 1TT(GB)**

(54) **Internal combustion engine and a method of operating same.**

(57) The invention relates to an internal combustion engine comprising at least one combustion chamber having an inlet valve and an outlet valve, the or each chamber being in communication with an inlet manifold when the inlet valve of the or each chamber is open, a piston reciprocable in the or each chamber to define a variable volume space therein, and means for controlling timing of the opening and closing of the inlet valve of the or each chamber so that opening occurs at a time when pressure in the or each chamber is lower than pressure in said inlet manifold, and the pressure differential across the inlet valve at said time is such that said opening of the inlet valve creates an in-flow to the or each chamber generating turbulence, at least some of which is present when combustion occurs in the or each chamber. Preferably, the inlet valve opens and closes twice during the induction and compression strokes, the first opening occurring at T.D.C. (A) and closing during the induction stroke (E), the second opening occurring at B.D.C. (B) or after it (G), and closing before the compression stroke finishes. Alternatively the outlet valve closing occurs after the end of the exhaust stroke and a single opening of the inlet valve occurs after the outlet valve closes, in order to produce said turbulence. A method of op-

erating such an engine is also disclosed.

FIG 4

This invention relates to internal combustion engines and their operation, and is particularly, though not exclusively, concerned with four stroke petrol engines.

The conventional four stroke petrol engine has poor efficiency at part load, this being due, to a large extent, to pumping work (pumping loss) which is the result of regulating the quantity of air/fuel mixture induced by means of the throttle butterfly. Two approaches to improving efficiency, and thus fuel economy, are the development of the lean burn engine and variable valve timing systems.

The development of lean burn engines has shown that part load efficiency can be improved by diluting the mixture, with some of the improvement being due to reduced pumping work and some due to lower flame temperatures which reduce heat losses and increase the ratio of specific heats. However, diluting the mixture reduces the flame speeds and efforts have thus subsequently been directed to designing induction systems to restore the burn rate by first generating swirl and then breaking this down to create random turbulence late in the compression stroke.

It has been found that too much turbulence leads to quenching of part of the flame. The more dilute the mixture, the lower is the level of turbulence at which the partial burning commences.

Two ways have been proposed for controlling inlet valve timing to regulate the quantity of mixture trapped, thereby eliminating pumping losses.

Firstly, it has been proposed to close the inlet valve early in the induction stroke to trap the quantity of mixture required. The trapped mixture is then expanded during the remainder of the induction stroke and compressed as the piston rises from BDC, so that the mixture acts as a gas spring giving rise to virtually no pumping work. At low loads the inlet valve will close well before the piston has reached its maximum speed (i.e. about half way down the induction stroke), so that the average mixture velocity at the valve will be lower than with a throttled engine and the amount of turbulence generated by induction is less.

Secondly, it has been proposed to close the inlet valve late, so that it remains open throughout the down-stroke (induction stroke) and during part of the following up-stroke, when some of the mixture is driven back into the inlet manifold. The later the valve is closed during the up-stroke, the less mixture is trapped. Again, pumping losses are substantially eliminated, but the amount of turbulence generated by the induction will be similar to a conventional throttled operation.

In theory both early and late inlet valve closing should eliminate pumping work at part load and reduce fuel consumption. In practice the improvement in fuel efficiency is less, possibly due to a substantial drop in the burn rate.

French Patent specification no. 8004030 discloses an internal combustion engine in which the inlet valve can be closed early or late, and also an arrangement where the valve opens twice, once between TDC and BDC and again between BDC and TDC prior to the compression phase. The timings of the inlet valve first closure and its second opening are chosen to minimise the flows and pressure drops across the inlet valve during its second opening. It appears that the engine has a fixed timing camshaft based valve system and thus a throttle butterfly. The mode of engine operation described will cause poor combustion at low loads and with dilute mixtures.

Two methods have been proposed for restoring burn rate. One method is the reduction of the valve lift so that the velocity through the smaller annular area at the valve increases, so increasing the turbulence. This turbulence dies away, heating the mixture and thus leading to a higher burn rate. However, it is believed that some of the turbulence will survive to TDC to speed combustion. The timing of the production of the turbulence is important, since if generated too early in the induction stroke it is likely to have decayed away completely, at least at low RPM. A second method proposes combining a variable compression ratio with late inlet valve closing in order to increase the temperature and pressure during combustion.

However, both variable valve lift and variable compression ratio arrangements involve extra mechanisms and complexity.

It is an object of the present invention to provide an internal combustion engine and a method of operating an internal combustion engine in which the problems and disadvantages of the prior art are overcome and fuel economy is improved.

According to the invention there is provided a method of operating an internal combustion engine having at least one combustion chamber with an inlet valve and an outlet valve, the or each chamber being in communication with an inlet manifold when the inlet valve of the or each chamber is open, a piston reciprocable in the or each chamber to define a variable volume space therein, and means for controlling the timing of the opening and closing of the inlet valve of the or each chamber, the method comprising producing first and second pressures in the inlet manifold and the at least one chamber respectively, said first pressure being greater than said second pressure, and opening the inlet valve of the or each chamber while this pressure differential exists, so that there is an in-flow into the or each chamber generating turbulence, at least some of which is present when combustion occurs in the or each chamber.

Preferably in the engine cycle between ignitions the inlet valve of a chamber opens twice or two inlet valves of a chamber open one after the other.

Desirably, with a four stroke petrol engine, the first opening occurs during the induction stroke and the second opening, which occurs during the compression stroke, leads to the generation of said turbulence.

According to another aspect of the invention there is provided an internal combustion engine comprising at least one combustion chamber having an inlet valve and an outlet valve, the or each chamber being in communication with an inlet manifold when the inlet valve of the or each chamber is open, a piston reciprocable in the or each chamber to define a variable volume space therein, and means for controlling timing of the opening and closing of the inlet valve of the or each chamber so that opening occurs at a time when pressure in the or each chamber is lower than pressure in said inlet manifold, and the pressure differential across the inlet valve at said time is such that said opening of the inlet valve creates an in-flow to the or each chamber generating turbulence, at least some of which is present when combustion occurs in the or each chamber.

As used herein, the expressions 'induction stroke', 'compression stroke' and 'exhaust stroke' have their usual meanings in relation to a piston of a four stroke engine, notwithstanding the opening and closing of inlet and exhaust valves at timings different from the normal relative to said strokes.

The invention will now be described, by way of example, with reference to the accompanying drawings, in which:

Figure 1 is a diagram showing the changes in in-cylinder pressure and volume during the exhaust and induction strokes and part of the compression stroke with a four-stroke petrol engine having a conventional throttle,

Figure 2 shows the same strokes as in Figure 1, but with unthrottled operation, and load control by late inlet valve closing, and

Figures 3 and 4 show the same strokes as in Figures 1 and 2, but with two openings of the inlet valve, the second opening being later in Figure 4 than in Figure 3.

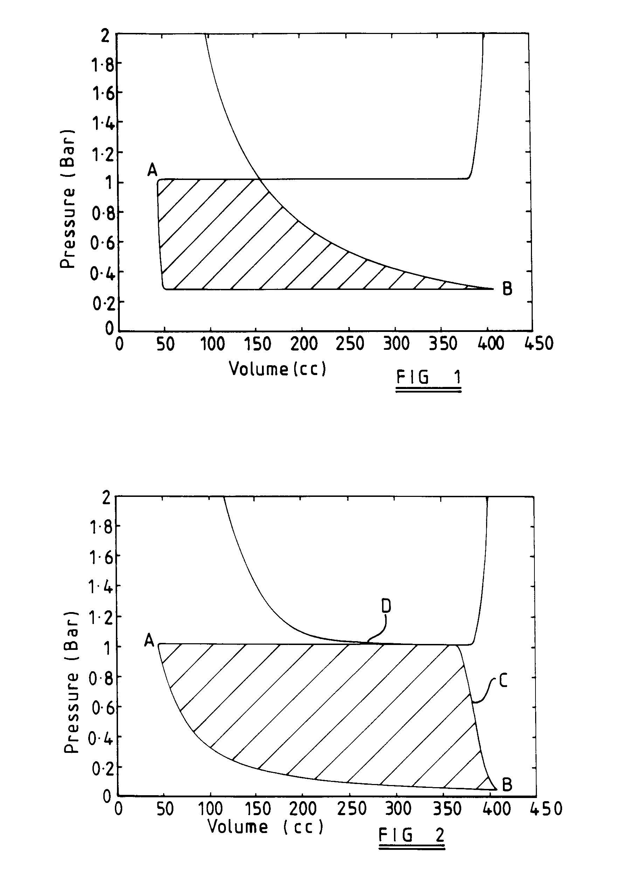

Figure 1 shows, at the top right hand corner, exhaust blowdown, which is the process which occurs at the opening of the exhaust valve of a cylinder in a conventional four-stroke engine having one inlet valve and one exhaust valve. The diagrams of Figures 1 to 4 assume a swept cylinder volume of about 360 cc per cylinder and a compression ratio of 9.3:1, so that the unswept volume is about 44 cc per cylinder. The speed was 1000 RPM and the same mass of air/fuel mixture was trapped in each case. Typically, the exhaust valve opens at about 40° BBDC, when the cylinder pressure is well above atmospheric, so that a sudden flow out of the cylinder results as the valve opens. As shown, the pressure falls to atmospheric (1 bar). During the exhaust stroke, the pressure remains at 1 bar and the volume decreases from 400 to 44 cc.

The exhaust valve closes at TDC, marked A, and the inlet valve opens. There is a small 'blowdown' of residuals from the cylinder into the inlet manifold as the pressure falls from atmospheric to that in the inlet manifold, i.e. 0.3 bar. The in-cylinder pressure remains at this value throughout the induction stroke. At BDC, marked B, the inlet valve closes and adiabatic compression begins. The shaded area represents pumping work expended during the cycles described.

Figure 2 shows the same strokes as Figure 1, but with unthrottled operation and load control by late inlet valve closing. The exhaust blowdown and strokes are as in Figure 1. At TDC, marked A, the exhaust valve closes, but here the inlet is not opened. The residuals are adiabatically expanded during the down-stroke, reaching a very low pressure by BDC, marked B. The inlet valve is now opened.

As the pressure in the inlet manifold at this time is atmospheric (i.e. 1 bar), the opening of the inlet valve creates 'blowdown turbulence' in the cylinder, this being produced by the sudden air/fuel mixture flow into the cylinder. Accordingly in Figure 2, the large pressure differential and full swept volume at the opening of the inlet valve gives maximum blowdown effect, marked C. As the piston rises, excess air/fuel mixture is driven back into the inlet manifold and approximately half way up the stroke from BDC the inlet valve closes, at D, trapping the same mixture as in Figure 1. Effective compression then begins.

It is evident from Figure 2, that the pumping work is much greater than in Figure 1. Even if the opening of the inlet valve was to be delayed as late as possible, the pumping work would still be greater than for the throttled condition.

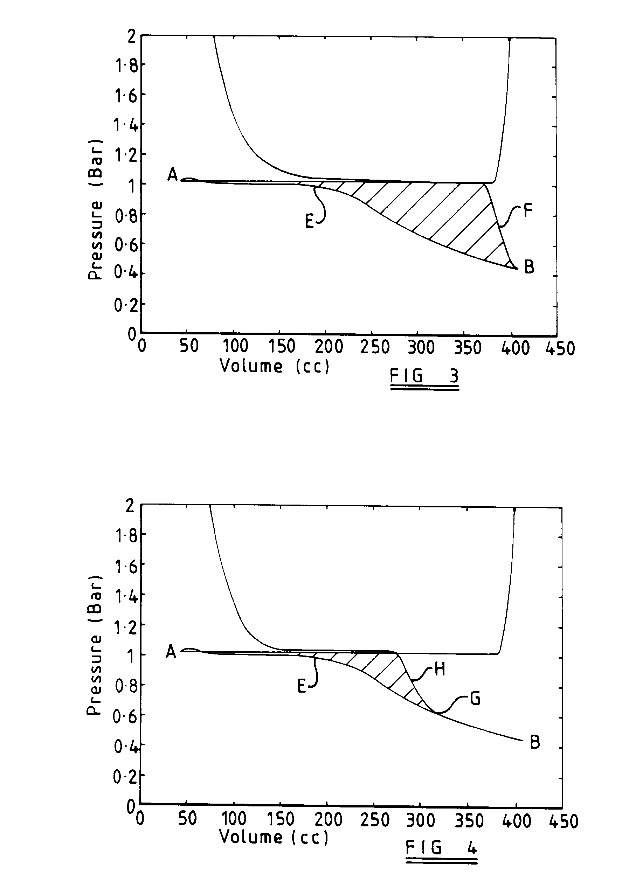

Figure 3 shows how the diagram changes from that of Figure 2 when the inlet valve is opened twice between TDC when the exhaust valve closes and the next TDC where compression is completed. The exhaust blowdown and stroke are as for Figures 1 and 2. At TDC the exhaust valve closes and the inlet valve opens. At approximately 175 cc the inlet valve closes, marked E, and adiabatic expansion continues to BDC. As the effective expansion ratio has been greatly reduced, the in-cylinder pressure at BDC is greater than in either Figure 1 or Figure 2. Accordingly, as the inlet valve opens for a second time (at BDC), the resulting blowdown, marked F, is less energetic than in Figure 2, due to both the smaller pressure differential and the greater mass already in the cylinder from the first induction. However, as can be seen from Figure 3, the pumping work is significantly less than in Figure 2 (or Figure 1). The inlet valve closes for the second time substantially as with the Figure 2 arrangement.

Figure 4 shows the same procedure as that which produced the diagram of Figure 3, but here the second opening is delayed, with the consequence that when it takes place, at G, the pressure differential across the inlet valve is less than in Figure 3, so that the blowdown, marked H, is less energetic. However, it does occur later in the upstroke, so reducing the time in which the turbulence could decay prior to combustion. Most noticeably, the pumping work is further reduced as compared to that of Figure 3. The inlet valve closes for the second time substantially as in the Figure 2 and 3 arrangements.

The production of 'blowdown' turbulence must be controlled so that it restores the burn rate as required. Too much turbulence could cause partial burning or flame extinctions, whilst too little could cause slow combustion. An additional consideration is the timing of the 'blowdown' effect, to control the time prior to combustion during which the turbulence can decay. It is well known that the burn rate increases with RPM due to increasing turbulence caused both by increasing inlet flow velocities and the reduction in time prior to combustion during which the turbulence can decay. The optimum valve timings for double opening will depend upon the sensitivity of burn rate to blowdown energy. Combustion chamber shape may affect the timing of the double opening.

The double opening described has primarily a low speed and low load application and it is important that the turbulence does not decay too soon at such low RPM. Even if mechanically practical, application of double opening to high speed and high load conditions is unnecessary, and would incur wasteful pumping losses. Adjustment to the valve timing will therefore have to be made in a progressive fashion to move from a double to a single opening as speed and load increase. Therefore at very light loads, the second opening of the inlet valve would preferably occur during the compression stroke. The timing would advance into the induction stroke at higher loads and the first inlet valve closure would similarly advance to maintain the blowdown pressure differential. At the very highest load there would be a single opening just before TDC as is conventional with fixed valve timing, the opening being of a duration to trap the required mass of mixture.

The invention is clearly applicable to an engine whose cylinders each have two, or more, inlet valves. For example with two inlet valves, one of them could open at TDC and close before the end of the induction stroke, with the other opening some time after BDC and closing before the end of the compression stroke. The two inlet valves could also be operated together.

Double opening as described may be applicable to a throttled engine by creating the required pressure differential.

As described the invention enables pumping work to be reduced. This in itself reduces the mixture temperature at the time of ignition, tending to reduce the burn rate, and making the generation of a controlled level of turbulence all the more important. The increased burn rates are important with low loads, lean or high EGR mixtures and for unthrottled operation.

Thus in summary, the magnitude of the turbulence generated is controlled by the size of the pressure differential at inlet valve opening and the proportion of mixture already trapped before blowdown. The burn rate also depends upon the time available for the turbulence to decay before combustion begins. The more dilute the mixture the lower the level of turbulence at which partial burning begins. The inlet valve timings are preferably controlled by the engine management system using appropriate mapping.

As described, the timing of the or each inlet valve is controlled. Additionally, the or each outlet or exhaust valve of the cylinder can have its timing controlled so as to increase the quantity of exhaust gases retained.

In one embodiment, the or each exhaust valve does not close until after the end of the exhaust stroke at TDC. Accordingly initially during the induction stroke, with the or each inlet valve closed, exhaust gas is induced into the chamber. The or each exhaust valve then closes and a single opening and closing of the or each inlet valve follows before the start of the power stroke. The opening of the or each inlet valve occurs under the same conditions as with the first embodiment, namely when the pressure in the chamber is lower than the pressure in the inlet manifold, and this pressure differential across the or each inlet valve at its time of opening creates an in-flow of air/fuel mixture of the chamber, generating 'blowdown' turbulence to assist subsequent combustion. The timing of the or each inlet valve closing is controlled in the same manner as described in said first embodiment. Preferably where more than one inlet valve is provided, all the inlet valves open and close together.

With the first induction being of exhaust gas and only the second induction being of air/fuel mixture, the in-chamber pressures and blowdown energies would be the same or substantially the same as for a double induction of air/fuel mixture. Preferably the or each inlet valve would open during the compression stroke.

This embodiment of the invention has two advantages. Firstly the exhaust gas induction results in a reduction in the formation of oxides of nitrogen. Secondly the method of this embodiment is easily implemented. With conventional camshafts the exhaust timing can be retarded at light loads so that opening occurs later and nearer BDC (not a problem at lower RPM), and the closing occurs later in the induction stroke, so that the exhaust gas is drawn back into the chamber.

Although dilution of the combustion mixture in the chamber slows the burn rate, resulting in more blowdown turbulence and a corresponding increase in pumping work being needed, the burn rate is controllable and earlier closing of the exhaust valve reduces the amount of trapped exhaust gas and increases the pressure differential across the or each inlet valve.

There can clearly be only a single exhaust valve and a single inlet valve or there can be two or more of each.

In another embodiment, almost the same effect occurs if the exhaust valve closes earlier, namely during the exhaust stroke. The earlier the closure, the more exhaust gas is trapped and these gases are then compressed and expanded as the piston rises to TDC and then descends again. The gases act as a spring and little energy is lost. The main advantage of early exhaust valve closure is that there is no possibility of the exhaust valve clashing with the piston near TDC.

The methods and apparatus described so far have been concerned with an engine having a carburettor for producing the air/fuel mixture required for combustion. However, the invention also has applicability to a fuel injected engine, being particularly advantageous in relation to cold starting and warm up, by improving mixture preparation.

With conventional port fuel injection, for example, the fuel spray is introduced when the inlet valve is closed. The fuel forms a liquid film on the back of the valve and the walls of the inlet port, this liquid film being substantially evaporated by the time that the inlet valve is opened. When the engine is cold, little of the fuel film is evaporated and the mixture drawn into the cylinder when the inlet valve opens has a reduced vapour concentration and much of the fuel is in droplet form. Extra fuel must thus be added during warm up to raise the concentration of both vapour and small diameter droplets to achieve an easily ignited mixture, but with the penalty of increased CO and HC emissions. This problem of slow evaporation of the fuel film on the manifold wall when the engine is cold, applies equally to carburettors and single point injectors.

A known proposed improvement is to use air assisted fuel injectors to generate a fuel spray of small diameter droplets which tend to remain in suspension in the air rather than forming a fuel film on the walls of the inlet port. Provided that the droplets are below a critical diameter of about $10\mu$m, the spark will ignite the cloud of droplets as easily as with a vaporised fuel mixture.

However, it is considered that the blowdown effect of the invention will produce a similar process of atomisation. If the inlet valve single or second opening is delayed until the descending piston has reduced the in-cylinder pressure to below that in the inlet manifold, such opening of the inlet valve results in a sudden inrush of air, which will tend to atomise the fuel collected around the inlet valve seat. Whether changes are needed to the control strategy for operation during cold running will depend on the type of double induction being used, i.e. as in Figure 3, or Figure 4, or with the initial induction being of exhaust gas. Port fuel injection offers the opportunity to time the injection between openings, or to direct the injection into one port only.

With double induction through a single inlet valve there is no pressure differential when the inlet valve opens for the first time and so fuel injection should be timed to occur between the first and second inlet valve openings. When the engine has warmed up the timing of the second inlet valve opening is determined by the compromise between late opening to increase blowdown turbulence (and burn rate) and increasing pumping work. When the engine is cold, the compromise may move towards later valve opening to increase the atomising effect.

Where the double induction includes exhaust gas induction as the first 'opening', the inlet valve opens only once and at a time when a pressure differential exists. Thus no change is needed in the fuel injection stage, though some delay in inlet valve opening may increase the degree of atomisation. Fuel may be injected at any time after the closing of the inlet valve on the previous cycle. The timing is not critical but there is some benefit from injecting as soon as possible, in order to maximise the evaporation of the fuel film on the walls.

The amount of retardation of inlet valve opening timing can be varied with coolant temperature so that extra pumping work can be progressively reduced as the coolant approaches its controlled temperature.

For carburettors and single point injection systems, it is also possible to improve mixture preparation for cold starting, by means of blowdown turbulence, but only for the double induction process in which exhaust gas is induced first and air (with fuel) is induced in the second stage.

Another application of the invention is to engines with catalytic converters, so as to shorten the time to catalyst 'light-off', namely the time to heat the catalyst to temperatures at which it is most efficient in the removal of HC, CO and NOx. Emission regulations in several countries demand that automobiles are tested over defined drive cycles starting from cold. Test results indicate that most of the measured HC emissions occur before the catalyst has reached its 'light-off' temperature.

The catalyst can be heated more rapidly by opening the exhaust valve earlier, in the power stroke. In this way less energy is converted into useful work because the expansion ratio is reduced and consequently the exhaust gases are hotter. To maintain engine speeds and torques, the amount of air/fuel mixture induced has to be correspondingly increased, and with double induction this means closing the inlet valve earlier to trap more mixture. Therefore the rate of heating the catalyst is increased both by the higher exhaust gas temperature and the increased mass flow.

The earlier exhaust valve opening and corresponding earlier inlet valve closing may be reduced either progressively with time or stepwise, having established experimentally how much time is needed to achieve 'light-off'. If a catalyst temperature signal is available, then the timings can be restored to their warmed up values as the catalyst reaches a specified temperature.

**Claims**

1. A method of operating an internal combustion engine having at least one combustion chamber with an inlet valve and an outlet valve, the or each chamber being in communication with an inlet manifold when the inlet valve of the or each chamber is open, a piston reciprocable in the or each chamber to define a variable volume space therein, and means for controlling the timing of the opening and closing of the inlet valve of the or each chamber, the method comprising producing first and second pressures in the inlet manifold and the at least one chamber respectively, said first pressure being greater than said second pressure, and opening the inlet valve of the or each chamber while this pressure differential exists, so that there is an in-flow into the or each chamber generating turbulence, at least some of which is present when combustion occurs in the or each chamber.

2. A method as claimed in claim 1, in which the inlet valve opens at the end of the induction stroke to produce said in-flow, and closes during the compression stroke.

3. A method as claimed in claim 1, in which the inlet valve opens during the compression stroke to produce said in flow, and also closes during the compression stroke.

4. A method as claimed in claim 2 or claim 3, in which the inlet valve opening producing said in-flow is its second opening, a first, earlier opening of the inlet valve occurring at the start of the induction stroke and closing during the induction stroke.

5. A method as claimed in claim 2 or claim 3, wherein a further inlet valve of the engine opens and closes during the induction stroke and prior to said inlet valve opening which produces said in-flow.

6. A method as claimed in claim 1, wherein there is only a single inlet valve, said valve opening only once, this being shortly after the start of the induction stroke, to produce said in-flow.

7. A method as claimed in any one of claims 1 to 3 or claim 6, in which the outlet valve is open at the start of the induction stroke,so that as the piston moves from top dead centre,exhaust gas is induced into the chamber, the outlet valve closing prior to said opening of the inlet valve which produces said in-flow.

8. A method as claimed in any one of claims 1 to 3 or claim 6, in which the outlet valve is closed before the end of the exhaust stroke to trap exhaust gases, which are then expanded as the piston moves through the induction stroke.

9. A method as claimed in any one of claims 1 to 8, in which fuel is injected for combustion in said at least one combustion chamber, said injection occurring prior to said inlet valve opening which creates said in-flow, which is of air, so that when said in-flow occurs said fuel is atomised by said induced air.

10. A method as claimed in claim 9 when appended to any one of claims 1 to 4, wherein the fuel is injected between the first and second openings of the inlet valve.

11. A method as claimed in claim 9 when appended to any one of claims 5 to 7, wherein the fuel is injected into a port of said inlet valve only, and after said inlet valve has closed on its previous cycle and before it opens on its current cycle.

12. An internal combustion engine comprising at least one combustion chamber having an inlet valve and an outlet valve, the or each chamber being in communication with an inlet manifold when the inlet valve of the or each chamber is open, a piston reciprocable in the or each chamber to define a variable volume space therein, and means for controlling timing of the opening and closing of the inlet valve of the or each chamber so that opening occurs at a time when pressure in the or each chamber is lower than pressure in said inlet manifold, and the pressure differential across the inlet valve at said time is such that said opening of the inlet valve creates an in-flow to the or each chamber generating turbulence, at least some of which is present when combustion occurs in the or each chamber.

13. An engine as claimed in claim 12, including means for controlling the timing of the opening and closing of the outlet valve.

14. An engine as claimed in either of claims 12 and 13, including fuel injection means to inject fuel for combustion in said at least one combustion chamber, such combustion at least at low load being with air induced at said in-flow when said inlet valve opens, in use.

15. An engine as claimed in any one of claims 12 to 14, including a catalytic converter.

16. An engine as claimed in claim 15, including means generating a signal, in use, related to the temperature of said catalytic converter.

17. An engine as claimed in claim 13, including a catalytic converter, and wherein said means for controlling the timing of the opening of the outlet valve are responsive to a signal related to the temperature of the catalytic converter.

18. An internal combustion engine when operated by the method of any one of claims 1 to 11.

FIG 1

FIG 2

8

FIG 3

FIG 4